# EUROPÄISCHE PATENTSCHRIFT

(11) **EP 2 080 259 B1**
(45) Veröffentlichungstag und Bekanntmachung des Hinweises auf die Patenterteilung: **17.11.2010**
(21) Anmeldenummer: 07820244.7
(22) Anmeldetag: 17.09.2007
(51) Int. Cl.: H02K 13/04, H01R 39/32, H01R 43/06

(54) **VERFAHREN UND VORRICHTUNG ZUM HERSTELLEN EINER ELEKTRISCHEN MASCHINE MIT EINEM KOMMUTATOR**
METHOD AND DEVICE FOR PRODUCING AN ELECTRIC MACHINE WITH A COMMUTATOR
PROCÉDÉ ET DISPOSITIF POUR PRODUIRE UNE MACHINE ÉLECTRIQUE COMPORTANT UN COMMUTATEUR

(30) Priorität: 29.09.2006 DE 102006046667
(43) Veröffentlichungstag der Anmeldung: 22.07.2009
(73) Patentinhaber: Robert Bosch GmbH, 70442 Stuttgart (DE)
(72) Erfinder: CHAUMET, Pascal, F-67500 Hagenau (FR); DIEDERICHS, Axel, 77815 Buehl (DE); NEUBAUER, Achim, 76547 Sinzheim-Vormberg (DE); FRIEDMANN, Andreas, 77815 Buehl (DE); ALTMEYER, Dirk, 77815 Buehl (DE); HUBER, Helmut, 77855 Achern (DE); HERM, Werner, 77815 Buehl (DE); SEILER-WEGNER, Edgar, 77815 Buehl (DE)
(86) Internationale Anmeldenummer: PCT/EP2007/059767
(87) Internationale Veröffentlichungsnummer: WO 2008/040630

(56) Entgegenhaltungen:
- JP-A- 9 154 263
- JP-A- 60 032 549
- US-A1- 2004 221 445

## Beschreibung

### Stand der Technik

Die Erfindung geht aus von einem Verfahren sowie einer Vorrichtung zum Herstellen einer elektrischen Maschine nach der Gattung der unabhängigen Ansprüche.

Mit der G 89 02 562.8 ist eine Ultraschall-Schweißvorrichtung zum Befestigen von Drahtenden von Drahtwicklungen an Anschlussfahnen eines Kommutators bekannt geworden. Dabei presst ein Sonotrodenkopf der Ultraschall-Schweißvorrichtung den Draht gegen eine Anschlußfahne des Kommutators. Dabei wird Ultraschallenergie direkt in den Draht eingebracht, der sich so stark erhitzt, dass er eine Schweißverbindung mit der Anschlussfahne des Kommutators bildet. Ein solches Ultraschweißverfahren hat den Nachteil, dass das Material des Drahts und der Anschlussfahne punktuell aufgeschmolzen wird, um eine feste Verbindung auszubilden. Ein solch starker Wärmeeintrag kann zur Schädigung der an die Anschlussfahne angrenzenden Bauteile führen.

Aus der JP 60032549 ist es bekannt, zur Herstellung einer elektrischen Maschine zwischen den Kommutatorhaken und einer Drahtwicklung ein Lot anzuordnen, wobei eine Elektrode gegen den Kommutatorhaken gedrückt und ein elektrischer Strom über die Elektrode durch den Kommutatorhaken geleitet wird, um durch das Aufschmilzen des Lots eine Verbindung zwischen dem Kommutatorhaken und der Drahtwikcklung zu erzeugen. Die JP 9154263 verwendet zu diesem Zweck zwei gegenüberliegende Elektroden.

### Offenbarung der Erfindung

### Vorteile der Erfindung

Das erfindungsgemäße Verfahren mit den Merkmalen des unabhängigen Anspruchs 1 hat durch die Verwendung zweier nebeneinander angeordneter Elektroden gegenüber dem Stand der Technik den Vorteil, dass zum Einen schnell Energie in den Kommutatorhaken hinein und aus diesem heraus transportiert werden kann. Dabei kann der Strom, der über die Elektroden durch den Kommutatorhaken fließt, derart bemessen werden, dass das Lot zur Ausbildung einer Lotverbindung zwischen der Drahtwicklung und dem Kommutator zum Schmelzen gebracht wird, ohne eine Schweißverbindung zwischen dem Kommutator und der Drahtwicklung auszubilden. Um zum Anderen eine mechanisch feste Verbindung zwischen der Drahtwicklung und dem Kommutator auszubilden, wird der Draht günstigerweise im Inneren des Biegebereichs angeordnet, an dem der Kommutatorhaken an einer entsprechenden Gegenfläche angeformt ist. Dabei wird das freie Ende des Kommutatorhakens gegen die Gegenfläche gedrückt, sodass die Drahtwicklungen durch den Kommutatorhaken fest umschlungen werden. Der freie Schenkel des Kommutatorhaken kann vorteilhaft mittels der Elektroden gegen die Gegenfläche gedrückt werden, nachdem die Drahtwicklungen in den U-förmig oder V-förmig offenen Kommutatorhaken eingelegt wurden. Bei dieser ersten Anpressphase werden die Elektroden noch nicht bestromt, um den Wärmeeintrag in den Kommutatorhaken zu minimieren.

Durch die in den abhängigen Ansprüchen 2-8 aufgeführten Maßnahmen sind vorteilhafte Weiterbildungen und Verbesserungen der in den unabhängigen Ansprüchen 1 und 9 angegebenen Merkmale möglich.

Durch die anschließende gezielte Bestromung der Elektroden kann so viel Wärme in den Kommutatorhaken eingebracht werden, dass die Isolation der Drahtwicklung beseitigt wird, das Lot aufschmilzt und der freie Schenkel des Kommutators unter dem Druck der Elektroden warm verformt wird.

Besonders günstig ist es, die Elektroden nach dem Ausbilden der Lötverbindung ohne Stromfluss weiter gegen den Kommutatorhaken zu pressen, um eine effektive Wärmeabfuhr durch die Elektroden zu ermöglichen.

Zweckmäßigerweise liegen die Elektroden in einem Abstand von etwa 0,5 bis 3 mm auf dem Kommutatorhaken an, um einen Kurzschluss zwischen den Elektroden bei dem erfindungsgemäßen Verbindungsverfahren zu unterbinden. Durch die weitestgehende Überdeckung der Elektroden mit dem Kommutatorhaken kann dieser einerseits ganzflächig gegen die Gegenfläche gedrückt werden und, wie bereits erwähnt, andererseits schnell Energie in den Kommutatorhaken hinein und aus diesem heraus transportiert werden. Als Lotmaterial eignet sich besonders Silber oder Zinn oder eine Legierung mit diesen Materialien, die näherungsweise zwischen 200 und 300°C - vorzugsweise zwischen 210 und 240°C - aufschmelzen oder anlegieren. Dadurch kann eine Beschädigung der an die Gegenfläche angrenzenden Bauteile verhindert werden.

Das Lot kann sehr kostengünstig angeordnet werden, indem der Kommutatorhaken zusammen mit der Gegenfläche auf der gesamten Oberfläche mit dem Lot beschichtet wird. Das Lot kann dann punktuell im Bereich, in dem der Kommutatorhaken nach dem Anpressen gegen die Gegenfläche anliegt, durch den Elektrodenstrom aufgeschmolzen werden.

Der Kommutatorhaken mit der Gegenfläche ist vorteilhaft aus einem kupferhaltigen Material hergestellt, das einen deutlich höheren Schmelzpunkt hat als das Lot.

Besonders geeignet ist das erfindungsgemäße Verfahren für die Herstellung eines Plan-Kommutators, bei dem die Gegenfläche einen radialen Fortsatz aufweist, der mit einer Kohle-Lauffläche für die elektrischen Schleifkontakte verbunden ist. Die Verbindungsschicht zwischen dem radialem Fortsatz und der Kohlelauffläche kann durch das erfindungsgemäße Herstellungsverfahren wirkungsvoll vor einer Überhitzung geschützt werden.

Bei Ausübung des erfindungsgemäßen Verfahren weist die Elektroden-Vorrichtung beispielsweise zwei Verstell-Zylinder auf, mittels derer die beiden benachbart zueinander angeordneten Elektroden unabhängig voneinander linear verstellbar sind. Dabei können die beiden Elektroden mit einem geringen Abstand voneinander auf den Kommutatorhaken gedrückt werden, wobei die Andruckkräfte bzw. die Verstellwege der beiden Elektroden unterschiedlich einstellbar sind.

### Kurze Beschreibung der Zeichnungen

Ausführungsbeispiele der Erfindung sind in den Zeichnungen dargestellt und in der nachfolgenden Beschreibung näher erläutert.

Es zeigen
Figur 1 schematisch einen Schnitt durch eine erfindungsgemäße Elektrodenanordnung und mit einem Kommutator,
Figur 2 eine Variation des schematisch dargestellten Herstellungsverfahren und
Figur 3 ein Ausschnitt einer erfindungsgemäß hergestellten elektrischen Maschine.

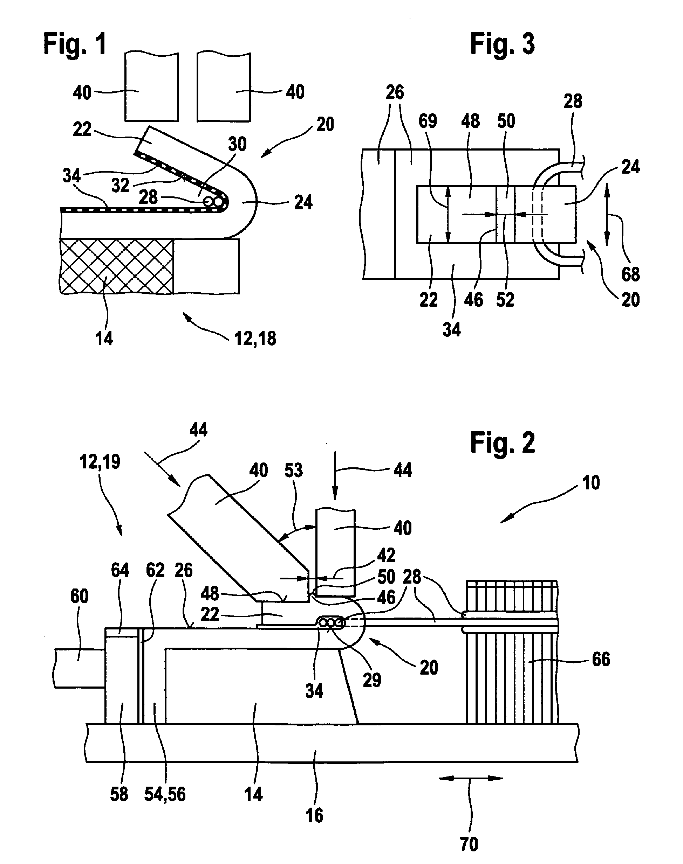

In Figur 1 ist als Teil einer elektrischen Maschine 10 ein Kommutator 12 dargestellt, der mit einem Kommutatorkern 14 auf einer Rotorwelle 16 befestigt ist. Der Kommutator 12 ist in Figur 1 als Trommelkommutator 18 oder als Plankommutator 19 ausgebildet, an dessen äußerem Umfang mehrere Kommutatorhaken angeordnet sind. Der Kommutatorhaken 20 weist einen freien Schenkel 22 auf, der über einen Biegebereich 24 mit einer Gegenfläche 26 des Kommutatorhakens 20 verbunden ist. Zum Aufwickeln einer elektrischen Drahtwicklung 28 auf die elektrische Maschine 10 ist der Kommutatorhaken 20 V-förmig oder U-förmig ausgebildet, sodass die Drahtwicklungen 28 leicht in die offene Öse 30 des Kommutatorhakens 20 eingelegt werden können. Die Gegenfläche 26 und die Innenseite 32 des freien Endes 22 sind mit einem Lot 34 beschichtet, schon bevor die Drahtwicklung 28 in die offene Öse 30 eingelegt wird. Um die Drahtwicklung 28 nach Beendigung des Wickelvorgangs der elektrischen Maschine 10 mit dem Kommutator 12 elektrisch und mechanisch zu verbinden, wird mittels zweier Elektroden 40 eine Lötverbindung hergestellt. Dazu werden die beiden Elektroden 40 mit einem Abstand 42 zueinander gegen den freien Schenkel 22 des Kommutatorhakens 20 angedrückt. Im Ausführungsbeispiel gemäß Figur 1 werden die beiden Elektroden 40 parallel zueinander gegen den Kommutatorhaken 20 gepresst, wobei der Abstand 42 beispielsweise 0,5 bis 3 mm beträgt. Während dem Andrücken der Elektroden 40 - näherungsweise senkrecht zur Gegenfläche 2 - wird der freie Schenkel 22 gegen die Gegenfläche 26 gedrückt. Bei diesem Verfahrensschritt werden die Elektroden 40 noch nicht bestromt, sodass die Umformung des Kommutatorhakens 20 eine Kaltumformung ist. Anschließend werden die beiden Elektroden 40 bestromt, sodass ein Strom über die Elektroden 40 durch den Kommutatorhaken 20 fließt. Dabei wird der Kommutatorhaken 20 so stark erwärmt, dass sich eine auf den Drahtwicklungen 28 angeordnete Isolationsschicht 29 verflüchtigt und das Lot 34 zwischen dem freien Schenkel 22 und der Gegenfläche 26 aufschmilzt. In diesem Zustand ist der Kommutatorhaken 20 so warm, dass dieser durch den Anpressdruck 44 der Elektroden 40 leicht verformbar ist und daher warm verprägt wird.

Ein solcher Verfahrensschritt ist beispielsweise in Figur 2 dargestellt, bei dem die linke Elektrode 40 etwas stärker gegenüber der Gegenfläche 26 verstellt ist, als die rechte Elektrode 40. Dadurch wird im Bereich des freien Schenkels 22 ein Absatz 46 an der äußeren Umfangfläche 48 des Kommutatorhakens 20 angeformt. Aufgrund des Anpressdruckes der beiden Elektroden 40 bildet sich ein Wulst 50, der sich in Umfangsrichtung 68 erstreckt und eine Breite 52 aufweist, die in etwa dem Abstand 42 zwischen den Elektroden 40 entspricht. Das aufgeschmolzene Lot 34 bildet nun einen Formschluss zwischen den Drahtwicklungen 28 und dem Kommutatorhaken 20 bzw. der Gegenfläche 26. Dadurch wird sowohl eine mechanisch stabile Verbindung, als auch eine elektrisch gut leitfähige Kontaktierung zwischen der Drahtwicklung 28 und dem Kommutator 20 hergestellt. Im Ausführungsbeispiel der Figur 2 wird beispielsweise die linke Elektrode 40 nicht parallel zur rechten Elektrode 40 verstellt, sondern unter einem Winkel 53 zu dieser. Bei dieser Lösung besteht zwischen den beiden Elektroden 40 mehr Bauraum für die Elektrodenanschlüsse oder eine nicht dargestellte Verschiebevorrichtung der Elektroden 40. Das Lot 34 ist bei dieser Ausführung nur im Bereich des Kommutatorhakens 20 angeordnet und erstreckt sich nicht über den gesamten axialen Bereich der Gegenfläche 26. Die Gegenfläche 26 ist hier mit einem radialen Fortsatz 54 verbunden, der als Träger 56 für eine Kohlen-Lauffläche 58 aufgebildet ist. Der Kommutator 12 ist hierbei als Plan-Kommutator 19 ausgebildet, sodass die Kohlen-Laufflächen 58 mit den axial angeordneten Schleifkontakten 60 zusammenwirken. Die Kohlen-Lauffläche 58 ist mit einer wärmeempfindlichen Verbindungsschicht 62 mit radialem Fortsatz 54 verbunden und am äußeren Umfang 48 mit einer Kunststoffschicht 64 umgeben. Die Elektroden 40 werden nach dem Abschalten des Heizstroms noch für eine gewisse Zeitspanne gegen den Kommutatorhaken 20 angepresst, um die Wärme aus dem Kommutator 12 abzuführen. Die Drahtwicklungen 28 verbinden den Kommutator 12 mit einem Ankerlamellenpaket 66, auf den die Drahtwicklungen 28 aufgewickelt sind. Je nach Ausführung der elektrischen Maschine 10 sind auf dem Ankerlamellenpaket 66 unterschiedlich viele Wicklungsstränge angeordnet, die mit einer unterschiedlichen Anzahl von Kommutatorhaken 20 verbunden sind. Daher kann auch die Anzahl von einzelnen Drahtwicklungen 28, die mit den einzelnen Kommutatorhaken 20 verlötet werden, entsprechend variieren, sodass beispielsweise eine oder zwei oder drei oder mehrere Drahtwicklungen 28 durch die Öse 30 geführt werden. Die Anzahl der Kommutatorhaken 20 entspricht der der unterschiedlichen Kommutatorlamellen, wobei alle Kommutatorhaken 20 nacheinander oder zumindest teilweise gleichzeitig nach dem erfindungsgemäßen Verfahren mit der Drahtwicklung 28 verbunden werden.

In Figur 3 ist ein Ausschnitt eines Kollektors 12 dargestellt, der mittels des erfindungsgemäßen Herstellungsverfahrens mit einer Drahtwicklung 28 verbunden wurde. Der freie Schenkel 22 liegt dabei an der Gegenfläche 26 an und ist mit dieser mittels des Lots 34 verbunden. Ebenso bildet das Lot 34 eine mechanische und elektrische Verbindung zwischen der Drahtwicklung 28 und der Gegenfläche 26, sowie der Innenfläche 32 des freien Schenkels 22. An der äußeren Umfangsfläche 48 des Kommutatorhakens 20 ist der Wulst 50 ausgebildet, dessen Breite 52 einem Abstand 42 entspricht, mit dem die beiden Elektroden 40 gegen den Kommutatorhaken 20 gepresst wurden. Der Wulst 50 erstreckt sich hier über den gesamten Umfangsbereich 69 des freien Schenkels 22 und bildet optional gleichzeitig einen Absatz 46 bezüglich der Axialrichtung 70. Der Kommutatorhaken 20 ist hierbei in Umfangsrichtung 68 schmaler ausgebildet, als die gegenüber liegende Gegenfläche 26.

Die Elektroden 40 sind beispielsweise als Wolfram-Elektroden ausgebildet, wobei eine Elektrode 40 am Ende des freien Schenkels 22 aufgesetzt wird und die andere Elektrode 40 den Biegebereich 24 des Kommutatorhakens 20 überdeckt. Während der Bestromung der Elektroden 40 werden diese gegenüber der Gegenfläche 26 nachgeführt, sodass sich der freie Schenkel 22 durch die Warmumformung sowohl an den Drahtwicklungen 28 als auch an der Gegenfläche 26 anlegt.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. So kann beispielsweise die Anordnung des Lots 34 entsprechend der Anwendung variiert werden und ggf. punktuell im Kontaktbereich zwischen der Drahtwicklung 28 und dem Kommutatorhaken 20 eingefügt werden. Ebenso können auch andere Materialien als Lot 34 verwendet werden, deren Schmelztemperatur ein Aufschmelzen des Kommutatorhakens 20 und/oder der Drahtwicklungen 28 verhindert. Auch kann die konkrete Form und Anbindung des Kommutatorhakens 20 an den Kommutator 12 variiert werden, wodurch insbesondere die axiale Baulänge des Kommutators durch das erfindungsgemäße Herstellungsverfahren reduziert werden kann. Vorzugsweise werden Elektroden 40 mit einer viereckigen Auflagefläche verwendet. Die Ausformung der Elektroden kann jedoch ebenso wie deren Andrückvorrichtung den herzustellenden elektrischen Maschinen angepasst werden. Bevorzugt findet das erfindungsgemäße Verfahren Anwendung für die Herstellung eines Rotors eines Elektromotors für bewegliche Teile im Kraftfahrzeug.

## Patentansprüche

1. Verfahren zum Herstellen einer elektrischen Maschine (10), insbesondere eines Elektromotors im Kraftfahrzeug, mit einem Kommutator (12), der mindestens einen Kommutatorhaken (20) zur Befestigung von mindestens einer elektrischen Drahtwicklung (28) aufweist, wobei der Kommutatorhaken (20) einen freien Schenkel (22) und einen Biegebereich (24) aufweist, der an einer Gegenfläche (26) angeformt ist, und wobei zwischen dem Kommutatorhaken (20) und der Drahtwicklung (28) ein Lot (34) angeordnet wird, und zwei Elektroden (40) gegen den Kommutatorhaken (20) gedrückt werden, und ein elektrischer Strom über die Elektroden (40) durch den Kommutatorhaken (20) geleitet wird, derart, dass das Lot (34) aufschmilzt und sich mit der Drahtwicklung (28) verbindet, **dadurch gekennzeichnet, dass** die Elektroden (40) benachbart zueinander angeordnet sind, und der freie Schenkel (22) während sich die Drahtwicklung (28) zwischen ihm und der Gegenfläche (26) befindet durch die Elektroden (40) mechanisch in Richtung der Gegenfläche (26) gedrückt wird, bevor Strom durch den Kommutatorhaken (20) geleitet wird.

2. Verfahren nach Anspruch 1, **dadurch gekennzeichnet, dass** durch den Kommutatorhaken (20) so lange Strom geleitet wird, bis eine Isolation (29) der Drahtwicklung (28) verdampft, und der freie Schenkel (22) warm verprägt wird.

3. Verfahren nach einem der vorhergehenden Ansprüche, **dadurch gekennzeichnet, dass** die Elektroden (40) auch nach dem Abschalten des Stromes gegen den Kommutatorhaken (20) gepresst werden, um die Wärme aus dem Kommutatorhaken (20) in die Elektroden (40) abzuführen.

4. Verfahren nach einem der vorhergehenden Ansprüche, **dadurch gekennzeichnet, dass** die beiden Elektroden (40) in einem Abstand (42) von 0,5 bis 3 mm, vorzugsweise 1 bis 2 mm, auf dem Kommutatorhaken (20) aufliegen, und sich insbesondere über den gesamten Umfangsbereich (69) des Kommutatorhakens (20) erstrecken.

5. Verfahren nach einem der vorhergehenden Ansprüche, **dadurch gekennzeichnet, dass** das Lot (34) Silber und/oder Zinn enthält und insbesondere bei 200 - 300°C schmilzt oder anlegiert.

6. Verfahren nach einem der vorhergehenden Ansprüche, **dadurch gekennzeichnet, dass** der Kommutatorhaken (20) und/oder die Gegenfläche (26) mit Lot (34) beschichtet werden, bevor die Drahtwicklung (28) in den Kommutatorhaken (20) eingelegt wird.

7. Verfahren nach einem der vorhergehenden Ansprüche, **dadurch gekennzeichnet, dass** der Kommutatorhaken (20) und die Gegenfläche (26) im Wesentlichen aus Kupfer hergestellt sind, das während der Stromdurchführung nicht aufschmilzt.

8. Verfahren nach einem der vorhergehenden Ansprüche, **dadurch gekennzeichnet, dass** die Gegenfläche (26) als Teil eines Zylindermantels ausgebildet ist, der insbesondere einen radialen Fortsatz (54) aufweist, der als Träger (56) für eine Kohle-Lauffläche (58) ausgebildet ist, der mit Schleifkontakten (60) der elektrischen Maschine (10) zusammenwirkt.

9. Vorrichtung (8) zum Verbinden einer Drahtwicklung (28) mit einem Kommutatorhaken (20) eines Kommutators (12) einer elektrischen Maschine (10), wobei der Kommutatorhaken (20) einen freien Schenkel (22) und einen Biegebereich (24) aufweist, der an einer Gegenfläche (26) angeformt ist, und wobei zwischen dem Kommutatorhaken (20) und der Drahtwicklung (28) ein Lot (34) angeordnet ist, **dadurch gekennzeichnet, dass** zwei Elektroden (40) der Vorrichtung (8) derart linear verschiebbar benachbart zueinander angeordnet sind, dass die beiden Elektroden (40) unabhängig voneinander mit geringem Abstand (42) zueinander gegen den freien Schenkel (22) des Kommutatorhakens (20) gedrückt werden können, um das Lot (34) zur Verbindung mit der Drahtwicklung (28) aufzuschmelzen.

## Claims

1. Method for producing an electrical machine (10), in particular an electric motor in a motor vehicle, having a commutator (12) which has at least one commutator hook (20) for mounting at least one electrical wire winding (28), with the commutator hook (20) having a free limb (22) and a bent region (24) which is integrally formed on a mating surface (26), and with a solder (34) being arranged between the commutator hook (20) and the wire winding (28), and two electrodes (40) being pressed against the commutator hook (20), and an electric current being conducted through the commutator hook (20) via the electrodes (40) in such a way that the solder (34) melts and connects to the wire winding (28), **characterized in that** the electrodes (40) are arranged adjacent to one another, and the free limb (22) is pressed mechanically in the direction of the mating surface (26) by the electrodes (40) when the wire winding (28) is located between said free limb and the mating surface (26), before current is conducted through the commutator hook (20).

2. Method according to Claim 1, **characterized in that** current is conducted through the commutator hook (20) until an insulation (29) of the wire winding (28) evaporates and the free limb (22) is hot-pressed.

3. Method according to either of the preceding claims, **characterized in that** the electrodes (40) are also pressed against the commutator hook (20) after the current is disconnected in order to dissipate the heat from the commutator hook (20) to the electrodes (40).

4. Method according to one of the preceding claims, **characterized in that** the two electrodes (40) are situated on the commutator hook (20) at a distance (42) of from 0.5 to 3 mm, preferably 1 to 2 mm, and, in particular, extend over the entire circumferential region (69) of the commutator hook (20).

5. Method according to one of the preceding claims, **characterized in that** the solder (34) contains silver and/or tin and, in particular, melts or forms a partial alloy at 200-300°C.

6. Method according to one of the preceding claims, **characterized in that** the commutator hook (20) and/or the mating surface (26) are coated with solder (34) before the wire winding (28) is placed in the commutator hook (20).

7. Method according to one of the preceding claims, **characterized in that** the commutator hook (20) and the mating surface (26) are produced substantially from copper which does not melt when current is being conducted.

8. Method according to one of the preceding claims, **characterized in that** the mating surface (26) is in the form of part of a cylindrical jacket which has, in particular, a radial projection (54) which is in the form of a support (56) for a carbon running surface (58) which interacts with sliding contacts (60) of the electrical machine (10).

9. Apparatus (8) for connecting a wire winding (28) to a commutator hook (20) of a commutator (12) of an electrical machine (10), with the commutator hook (20) having a free limb (22) and a bent region (24) which is integrally formed on a mating surface (26), and with a solder (34) being arranged between the commutator hook (20) and the wire winding (28), **characterized in that** two electrodes (40) of the apparatus (8) are arranged adjacent to one another in a linearly displaceable manner in such a way that the two electrodes (40) can be pressed against the free limb (22) of the commutator hook (20) independently of one another at a small distance (42) from one another in order to melt the solder (34) for the purpose of connection to the wire winding (28).

## Revendications

1. Procédé de fabrication d'une machine électrique (10), en particulier d'un moteur électrique pour un véhicule automobile, qui présente un commutateur (12) doté d'au moins un crochet de commutateur (20) destiné à fixer au moins un enroulement (28) de fil électrique, le crochet de commutateur (20) présentant une branche libre (22) et une partie flexible (24) qui épouse une surface complémentaire (26), une brasure (34) étant disposée entre le crochet de commutateur (20) et l'enroulement (28) de fil, deux électrodes (40) étant repoussées contre le crochet de commutateur (20) et un courant électrique étant amené à traverser les électrodes (40) par les crochets de commutateur (20) de telle sorte que la brasure (34) fonde et se relie à l'enroulement (28) de fil,
**caractérisé en ce que**
les électrodes (40) sont disposées au voisinage l'une de l'autre et
**en ce que** pendant que l'enroulement (28) de fil se trouve entre la branche libre (22) et la surface complémentaire (26), la branche libre est repoussée mécaniquement par les électrodes (40) en direction de la surface complémentaire (26) avant que le courant soit amené dans le crochet de commutateur (20).

2. Procédé selon la revendication 1, **caractérisé en ce que** du courant est passé dans le crochet de commutateur (20) jusqu'à ce qu'une isolation (29) de l'enroulement (28) de fil s'évapore, la branche libre (22) étant alors estampée à chaud.

3. Procédé selon l'une des revendications précédentes, **caractérisé en ce que** pour évacuer dans les électrodes (40) la chaleur du crochet de commutateur (20), les électrodes (40) sont également repoussées contre le crochet de commutateur (20) après que le courant a été débranché.

4. Procédé selon l'une des revendications précédentes, **caractérisé en ce que** les deux électrodes (40) sont placées à une distance (42) de 0,5 à 3 mm et de préférence de 1 à 2 mm sur le crochet de commutateur (20) et s'étendent en particulier sur toute la partie périphérique (69) du crochet de commutateur (20).

5. Procédé selon l'une des revendications précédentes, **caractérisé en ce que** la brasure (34) contient de l'argent et/ou de l'étain et fond ou s'allie en particulier entre 200 et 300°C.

6. Procédé selon l'une des revendications précédentes, **caractérisé en ce que** le crochet de commutateur (20) et/ou la surface complémentaire (26) sont revêtus de brasure (34) avant que l'enroulement (28) de fil soit placé dans le crochet de commutateur (20).

7. Procédé selon l'une des revendications précédentes, **caractérisé en ce que** le crochet de commutateur (20) et la surface complémentaire (26) sont réalisés essentiellement en cuivre qui ne fond pas lorsque le courant passe.

8. Procédé selon l'une des revendications précédentes, **caractérisé en ce que** la surface complémentaire (26) est configurée comme partie d'une enveloppe cylindrique qui présente en particulier un prolongement radial (54) qui est configuré comme support (56) d'une surface (58) de déplacement en carbone qui coopère avec des contacts coulissants (60) de la machine électrique (10).

9. Dispositif (8) en vue de relier un enroulement (28) de fil à un crochet (20) d'un commutateur (12) d'une machine électrique (10), le crochet de commutateur (20) présentant une branche libre (22) et une partie flexible (24) qui épouse une surface complémentaire (26), une brasure (34) étant disposée entre le crochet de commutateur (20) et l'enroulement (28) de fil,
**caractérisé en ce que**
deux électrodes (40) du dispositif (8) sont disposées au voisinage l'une de l'autre de manière à pouvoir coulisser linéairement de telle sorte que les deux électrodes (40) puissent être repoussées indépendamment l'une de l'autre à petite distance (42) l'une par rapport à l'autre contre la branche libre (22) du crochet de commutateur (20) pour faire fondre la brasure (34) en vue d'assurer la liaison avec l'enroulement (28) de fil.
